# EUROPEAN PATENT APPLICATION

(11) **EP 1 106 844 A2**
(43) Date of publication of application: **13.06.2001**
(21) Application number: 00310666.3
(22) Date of filing: 30.11.2000
(51) Int. Cl.: F16B 13/06

(54) **Anchor for hard stone**

(30) Priority: 06.12.1999 JP 34572599
(71) Applicant: YUGENKAISHA SHINJO SEISAKUSHO, Nishinari-ku, Osaka (JP)
(72) Inventor: Shinjo, Katsumi, Osaka (JP)
(74) Representative: Price, Paul Anthony King

(57) **Abstract**

An anchor (1) for hard stone has a female-threaded main part (2) formed of a stainless steel, a thinned cylindrical extension (3) formed of the same or a different stainless steel and preliminarily annealed, and an expander (4) substantially columnar in shape and harder than the thinned cylindrical extension (3). The extension holding the expander (4) has a distal tapered region (6) whose inner diameter gradually decreases towards a distal opening (5) of the extension. A proximal end of the extension is resistance welded to a distal end of the main part so as to be coaxial with each other. The expander can be struck towards the distal opening to be forced into engagement with the tapered region, causing a partial and plastic deformation of the extension.

## Description

### BACKGROUND OF THE INVENTION

The present invention relates to a female-threaded anchor for hard stone such as granite that has been used as a material to decorate the interior and/or exterior of any building, wherein the anchor is designed to be struck into the hard stone.

Walls of some buildings have been formed of relatively hard stone (sometimes called 'adamantine stone') such as granite, and some ornamental articles, some hardware and/or any other attachments have been fixed on those walls. In many cases, a wood piece has been forced into a rough hole drilled in the wall, enabling a bolt to be screwed into the wood piece for setting in place the ornamental article or the like. However, this method has failed to provide a sufficient retention (i.e., withdrawal resistance) to the attached articles. Those wood pieces have dried and shrunk themselves in the course of time, and in particular those pieces fixed in the outer walls have been exposed to rain rendering them repeatedly wetted and subsequently dried. Further deterioration has thus resulted in their relatively weak retention, merely making it possible to secure on the walls some goods lighter in weight.

The prior art conventional female-threaded anchors or male-threaded anchor bolts have also proved unsatisfactory from some points of view. They had been caused each to expand within a rough hole preliminarily drilled in a concrete wall or the like not of an extreme hardness, thereby forcing outwards some peripheral surface regions around such a preliminary hole. In the case of granite or the like adamantine stones much harder than such a concrete texture, the peripheral wall surrounding a preliminary hole have scarcely been expanded. Consequently, the anchors have been brought into a tight but simple contact with the hole periphery, providing a poorer retention force.

### SUMMARY OF THE INVENTION

The present invention was made in view of deficiency in the prior art summarized above. An aspect of the invention is therefore to provide a female-threaded anchor designed for use in hard stone such as granite and constructed such that after insertion into a preliminary hole drilled in any hard stone its part can be struck to ensure an improved resistance to withdrawal.

According to one aspect, the anchor proposed herein comprises, in common with the prior art, a female-threaded main part formed of a stainless steel, a thinned cylindrical extension with a peripheral wall of a reduced thickness, and an expander substantially columnar in shape and disposed in the cylindrical extension, this extension being formed of the same or a different stainless steel, having a wall thickness smaller than the main part and being preliminarily annealed, and the expander being of a higher hardness than said extension. However, the present anchor is characterized in that its thinned cylindrical extension has a distal tapered region whose inner diameter gradually decreases towards a distal opening of the extension, and a proximal end thereof is resistance welded to a distal end of the female-threaded main part such that an axis of said extension is aligned with an axis of the main part. The expander thus retained in its entirety in the cylindrical extension fixedly adjoined to the main part is capable of being struck into the tapered region and forced towards the distal opening of said extension, whereby a peripheral surface of the tapered region is brought into a forced engagement with the periphery of said expander, causing a partial and plastic deformation of the thinned cylindrical extension.

Preferably, the expander as one part of the female-threaded anchor has on it outer periphery a plurality of radially jutting ridges that extend each in parallel with the axis of the cylindrical extension so as to facilitate partial and plastic deformation thereof.

### BRIEF DESCRIPTION OF THE DRAWINGS

Fig. 1 is a front-elevational cross section of a female-threaded anchor provided in an embodiment of the present invention;
Fig.2 is a cross section taken along the line 2 - 2 in Fig. 1;
Fig.3 is a vertical cross section of the female-threaded anchor shown in use and taking its upright position; and
Fig.4 is an enlarged cross section taken along the line 4 - 4 in Fig. 3.

### THE PREFERRED EMBODIMENTS

Now, a preferable embodiment of the present invention will be described in detail referring to the drawings.

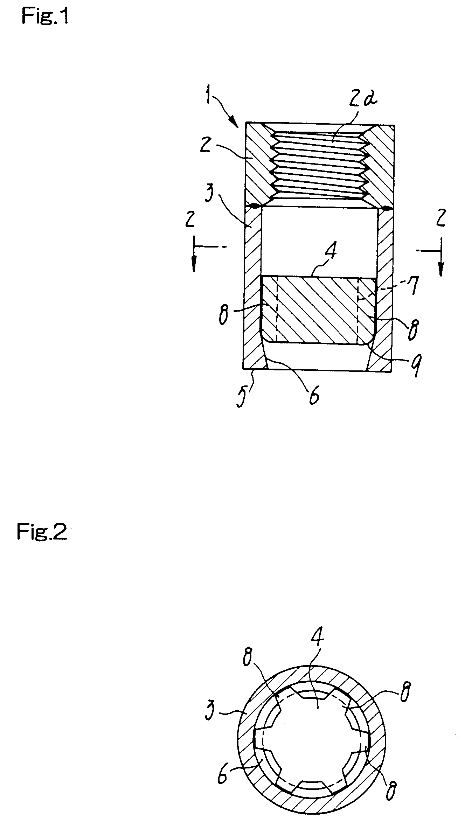

Figs. 1and 2 show a female-threaded anchor 1 of the invention, which anchor comprises a female-threaded main part 2, a thinned cylindrical extension 3 and an expander 4. The main part 2 is a kind of round nut. A proximal end of the cylindrical extension 3 is resistance welded to a distal end of the main part 2so as to be coaxially integral therewith. The extension 3 has a distal region 5 having an inner periphery 6 tapered such that its diameter decreases towards a distal opening of said extension. Both the main part 2 and the cylindrical extension 3 are made of the same stainless steel or of different ones, and annealed as a whole. In an example wherein the screw thread of main part 2 has a diameter of the standard 'M6', outer diameter of both the main part 2 and extension 3 may be 9 mm and wall thickness of the latter may be 1.0 mm.

The expander 4 substantially consists of a short columnar body 7 that has a plurality of ('eight' in the example illustrated in Fig. 2) ridges 8 that jut radially and outwards. Each of the ridges 8 extends in parallel with the axis of the cylindrical extension 3, and a circumcircle surrounding all the ridges 8 has a diameter slightly smaller than the inner diameter of an upper or proximal major region of said extension. A lower end 9 of each ridge 8 is chamfered to be arcuate in cross section so that the expander 4 can be struck to smoothly advance towards the extension's distal or deepest end. The expander 4 is formed by pressing a carbon steel block and subsequently quenched to be of a hardness higher than the thinned extension 3.

Such an expander 4 is preliminarily placed in the cylindrical extension 3 so as to temporarily rest on the tapered inner periphery 6 thereof. Subsequently, the extension 3 holding therein the expander 4 will be resistance welded to the female-threaded main body 2 so that their axes coincide with each other. The expander 4 will thus be retained in the cylindrical extension 3 that has been consolidated with the main part in this way, thereby providing a finished anchor 1.

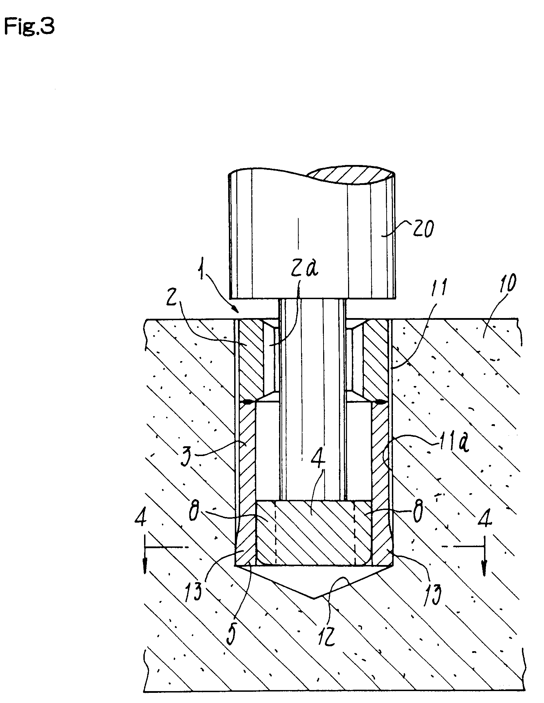

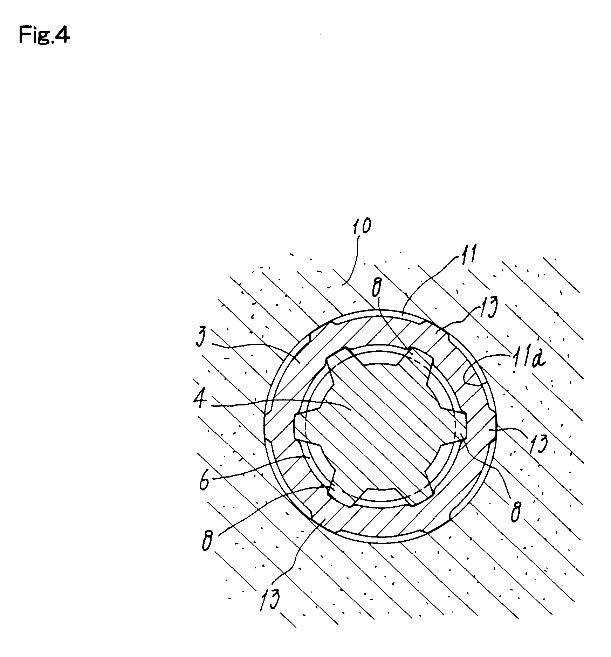

Fig. 3 shows how to use the female-threaded anchor 1 of the described structure. A rough hole 11, that will be drilled at first in an adamantine article 10 of granite, is of a diameter slightly larger than the outer diameter of the cylindrical extension 3. Depth of the rough hole 11 is generally equal to the anchor's 'overall length', i.e., sum of the lengths of the main part 2 and extension 3. Next, this anchor 1 will be inserted in the rough hole 11 until the distal end 5 of extension 3 rests on the hole's bottom 12. Subsequent to these preliminary steps, the distal rod of a striking tool 20 will be guided through a threaded bore 2a of the main part 2 and into the thinned extension 3, before striking the tool to thrust the expander 4 towards the distal end opening 5. As a result, the ridges 8 on the outer periphery of the expander will bite the tapered inner periphery 6 of thinned extension 3 so as to centrifugally press portions 13 thereof facing and contacting the corresponding ridges. A locally concentrated stress thus imparted to each portion 13 will bring about plastic deformation thereof in a radial and outward direction. Fig. 4 shows those portions 13 of the extension 3 in this state, wherein they are in a forced engagement with an inner periphery 11 a of the rough hole 11, particularly with extremely shallow grooves thus formed in this periphery 11a. Resistance to withdrawal will thus be enhanced when the described anchor is used, although cylindrical extension 3 will not exert so extraordinarily strong hindrance against its plastic deformation, by virtue of its preliminary annealing treatment. It is almost impossible to pull out the anchor 1 thus secured firmly in the rough hole 11.

It will now be apparent that the female-threaded anchor is suited to use with hard stones such as granite or other adamantine stones and constructed such that after insertion into a preliminary hole drilled in any hard stone its expander can be struck to ensure an improved resistance to withdrawal.

## Claims

1. A female-threaded anchor designed for hard stone, the anchor comprising: a female-threaded main part formed of a stainless steel; a cylindrical extension with a peripheral wall;
an expander substantially columnar in shape and disposed in the cylindrical extension; the extension being formed of the same or a different stainless steel, having a wall thickness smaller than the main part and being preliminarily annealed; and the expander being of a higher hardness than said extension,
characterized in that the cylindrical extension has a distal tapered region whose inner diameter gradually decreases towards a distal opening of the extension, and a proximal end thereof is resistance welded to a distal end of the female-threaded main part such that an axis of said extension is aligned with an axis of the main part,
and in that the expander thus retained in its entirety in the cylindrical extension fixedly adjoined to the main part is capable of being struck into the tapered region and forced towards the distal opening of said extension, whereby a peripheral surface of the tapered region is brought into forced engagement with the periphery of said expander, causing a partial and plastic deformation of the cylindrical extension.

2. A female-threaded anchor as defined in claim 1, characterized in that the expander has a plurality of radially jutting ridges that extend each in parallel with the axis of the cylindrical extension so as to facilitate partial and plastic deformation thereof.
